# EUROPEAN PATENT APPLICATION

(11) **EP 3 916 650 A2**
(43) Date of publication of application: **01.12.2021**
(21) Application number: 21175988.1
(22) Date of filing: 26.05.2021
(51) Int. Cl.: G06Q 10/02, G06Q 30/06, G06Q 30/02, G06Q 20/36, G06Q 20/22

(54) **PAYMENT SYSTEM, COMPUTER READABLE RECORDING MEDIUM, AND PAYMENT SERVER**

(30) Priority: 29.05.2020 JP 2020095063
(71) Applicant: TOYOTA JIDOSHA KABUSHIKI KAISHA, Toyota-shi, Aichi-ken 471-8571 (JP)
(72) Inventor: MAYA, Tomokazu, Toyota-shi, Aichi-ken 471-8571 (JP); YAMAMURO, Naoki, Toyota-shi, Aichi-ken 471-8571 (JP); NAKATANI, Yuki, Toyota-shi, Aichi-ken 471-8571 (JP); MIYAKE, Kosuke, Toyota-shi, Aichi-ken 471-8571 (JP); MIZUNO, Soushi, Toyota-shi, Aichi-ken 471-8571 (JP); FURUHATA, Yasushi, Toyota-shi, Aichi-ken 471-8571 (JP); NARITA, Masataka, Toyota-shi, Aichi-ken 471-8571 (JP); TAKEHARA, Yasuhiro, Toyota-shi, Aichi-ken 471-8571 (JP)
(74) Representative: Cabinet Beau de Loménie

(57) **Abstract**

A payment system includes: a payment server including a first processor including hardware; and a terminal including a second processor including hardware, and a display, wherein the first processor is configured to cause the display to display a condition for renting a vehicle, the condition being set based on credit information on a plurality of payment methods registered in a wallet system.

## Description

### BACKGROUND

The present disclosure relates to a payment system, a computer readable recording medium, and a payment server.

Japanese Patent No. 6,530,119 discloses a technique for identifying a payment method using a user terminal and a payment terminal, based on positional information of the user terminal and positional information of the payment terminal in a store.

### SUMMARY

There is a need for a payment system, a computer readable recording medium, and a payment server that improve the convenience of a wallet system in which a plurality of payment methods are available.

According to one aspect of the present disclosure, there is provided a payment system including: a payment server including a first processor including hardware; and a terminal including a second processor including hardware, and a display, wherein the first processor is configured to cause the display to display a condition for renting a vehicle, the condition being set based on credit information on a plurality of payment methods registered in a wallet system.

### BRIEF DESCRIPTION OF THE DRAWINGS

FIG. 1 is a diagram that schematically illustrates a configuration of a wallet system including a payment server according to an embodiment;
FIG. 2 is a block diagram that illustrates the details of constituent elements in the wallet system including the payment server according to the embodiment;
FIG. 3 is a diagram that schematically illustrates a relationship between a wallet and a payment method, in the wallet system including the payment server according to the embodiment;
FIG. 4 is a diagram that illustrates an example in which an operation and display unit of a user terminal displays a list of payment methods, in the payment server according to the embodiment;
FIG. 5 is a diagram that illustrates an example in which the operation and display unit of the user terminal displays a list of rentable vehicle classes, in the payment server according to the embodiment; and
FIG. 6 is a diagram that illustrates an example in which the operation and display unit of the user terminal displays a list of rentable vehicle classes, in the payment server according to the embodiment.

### DETAILED DESCRIPTION

With reference to the drawings, a description will be given of a payment system, a computer readable recording medium storing a payment program, and a payment server according to an embodiment of the present disclosure. It should be noted that constituent elements to be described in the following embodiment include those replaceable by a person skilled in the art with ease or those substantially identical therewith.

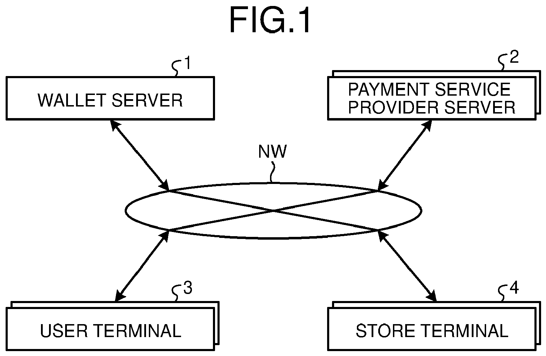

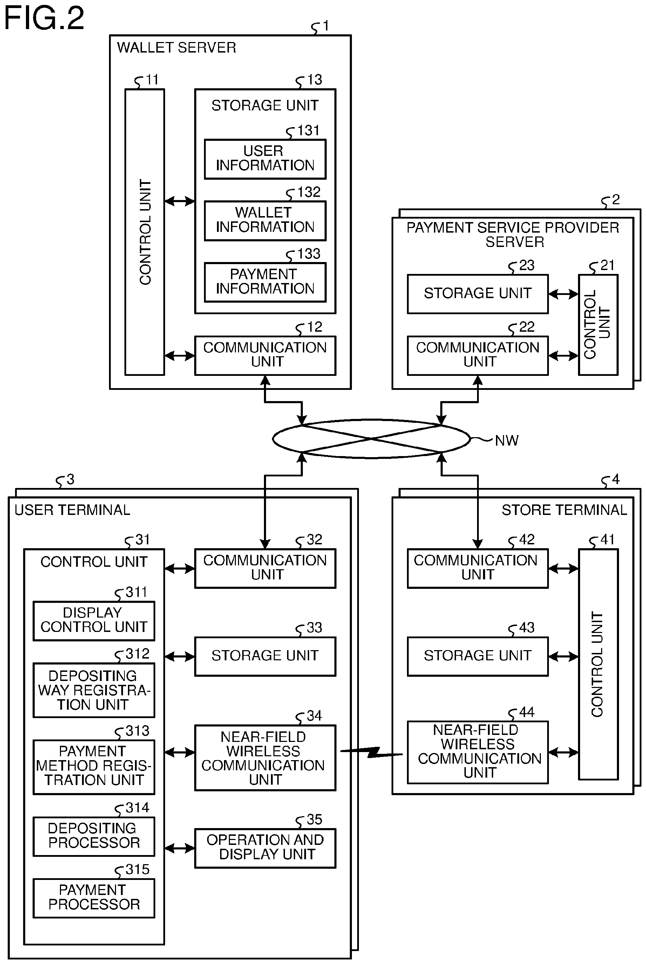

With reference to FIGS. 1 and 2, a description will be given of a configuration of a wallet system according to the present embodiment. As illustrated in FIG. 1, the wallet system includes a wallet server 1, a payment service provider server 2, a user terminal 3, and a store terminal 4.

The wallet server 1, the payment service provider server 2, the user terminal 3, and the store terminal 4 are configured to enable mutual communications via a network NW. The network NW is constituted of, for example, an Internet network, a mobile phone network, or the like.

The wallet server 1 is a server for comprehensively managing the wallet system in which a plurality of payment methods are registered, and an administrator of the wallet system manages the wallet server 1. The wallet server 1 also has a function as a system for renting a vehicle to a user, such as rent-a-car or carsharing. However, the wallet server 1 may be a payment server in which one payment method is registered. As illustrated in FIG. 2, the wallet server 1 includes a control unit (a first processor) 11, a communication unit 12, and a storage unit 13.

Specifically, the control unit 11 includes a processor including a central processing unit (CPU), a digital signal processor (DSP), a field-programmable gate array (FPGA), and the like, and a memory (a main storage unit) including a random access memory (RAM), a read only memory (ROM), and the like.

The control unit 11 loads a program stored in the storage unit 13 onto a working region of the main storage unit, and executes the program to control each constituent element or the like. The control unit 11 thus enables a function according to a predetermined purpose.

The communication unit 12 includes, for example, a local area network (LAN) interface board, a wireless communication circuit for wireless communications, and the like. The communication unit 12 is connected to the network NW, such as the Internet, which is a public communication network. The communication unit 12 is connected to the network NW to communicate with the payment service provider server 2, the user terminal 3, and the store terminal 4.

The storage unit 13 includes a recording medium. Examples of the recording medium may include, but not limited to, an erasable programmable ROM (EPROM), a hard disk drive (HDD), and a removable medium. Examples of the removable medium may include disc recording media such as a universal serial bus (USB) memory, a compact disc (CD), a digital versatile disc (DVD), and a Blu-ray (registered trademark) disc (BD). The storage unit 13 is capable of storing an operating system (OS), various programs, various tables, various databases, and the like. The storage unit 13 according to the present embodiment stores user information 131, wallet information 132, and payment information 133 for each user of the wallet system.

The user information 131 is information on a user who uses the wallet system. Examples of the user information 131 on a user who has signed up for the wallet system may include, but not limited to, a user ID, a password, a user's name, contact information (e.g., an address, a phone number, an e-mail address, etc.) of the user, a record of a sign-up, information on a registered payment method, user's credit information based on payment information, information on another payment method registered for depositing into a payment method, and a personal identification number in making payment. Among the various kinds of user information 131, the user ID and the password are used for authentication processing such as login to the wallet server 1.

The wallet information 132 is information on a wallet of the wallet system. The term "wallet" refers to an application for managing virtual deposit and withdrawal using various payment methods such as a credit card and electronic money. Examples of the wallet information 132 may include, but not limited to, a user ID, a payment method, the balance of electronic money, a record of electronic money deposited, and a record of electronic money used.

The payment information 133 is information on payment in the wallet system. Example of the payment information 133 may include, but not limited to, a user ID, a payment way used for payment (e.g., payment with electronic money (contactless payment), payment by scanning, payment with a code, etc.), and a record of payment.

The payment service provider server 2 is a server for managing an account and a credit card of a user. The payment service provider server 2 is installed in a financial institution (e.g., a bank, a credit association, a credit union, a worker's credit union, etc.) and a credit card company. The payment service provider server 2 includes a control unit 21, a communication unit 22, and a storage unit 23. The control unit 21, the communication unit 22, and the storage unit 23 are respectively similar to the control unit 11, the communication unit 12, and the storage unit 13 in a physical aspect.

The storage unit 23 stores account information, credit card information, and credit information for each user of the wallet system. Examples of the account information may include, but not limited to, a user's name, an account number, an account balance, and a record of deposit and withdrawal. Examples of the credit card information may include, but not limited to, a user's name, a credit card number, an expiration date of a credit card, a total credit limit, and a record of a credit card used. Examples of the credit information may include, but not limited to, an account balance, a record of deposit into and withdrawal from an account, a rank of a credit card (e.g., gold, platinum, black, etc.), user's credit information determined based on, for example, a record of the credit card used, and a score calculated based on the credit information.

The user terminal 3 is a computer terminal which a user uses. Examples of the user terminal 3 of the user may include, but not limited to, a smartphone, a mobile phone, a tablet terminal, a wearable computer, a personal computer, and a car navigation system installed in a vehicle. The user terminal 3 may be any terminal as long as it is capable of exchanging information with the wallet server 1.

The user terminal 3 includes a control unit (a second processor) 31, a communication unit 32, a storage unit 33, a near-field wireless communication unit 34, and an operation and display unit (a display) 35. The control unit 31, the communication unit 32, and the storage unit 33 are respectively similar to the control unit 11, the communication unit 12, and the storage unit 13 in a physical aspect. The control unit 31 executes programs to function as a display control unit 311, a depositing way registration unit 312, a payment method registration unit 313, a depositing processor 314, and a payment processor 315.

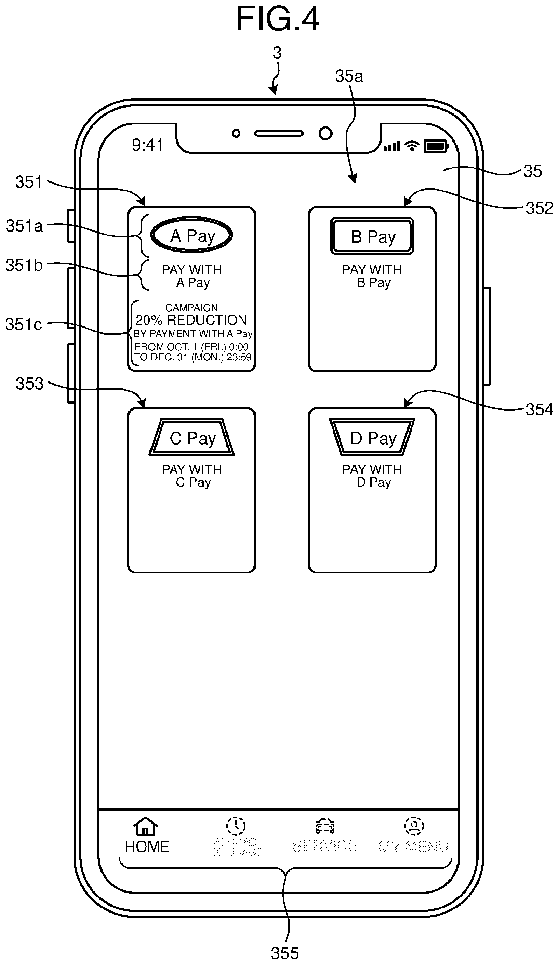

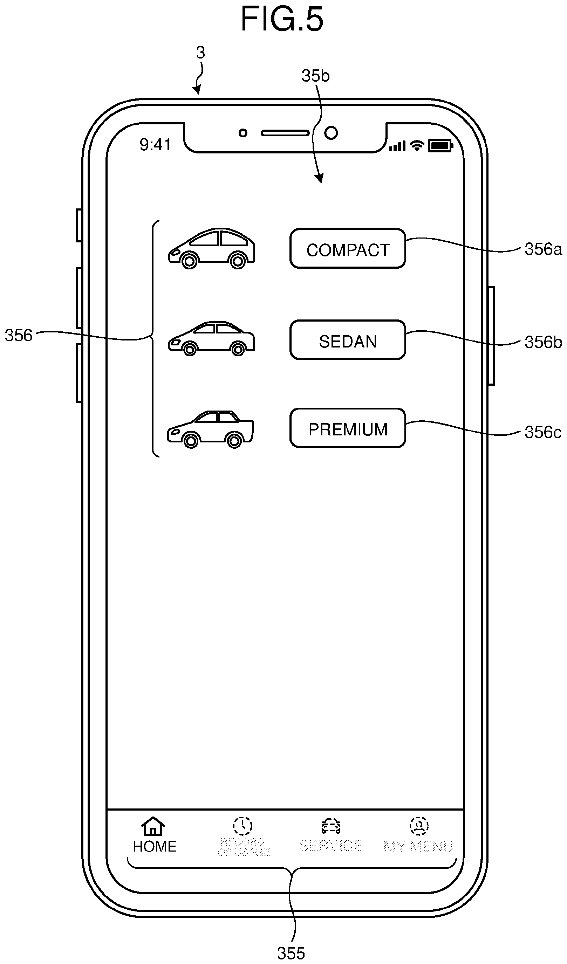

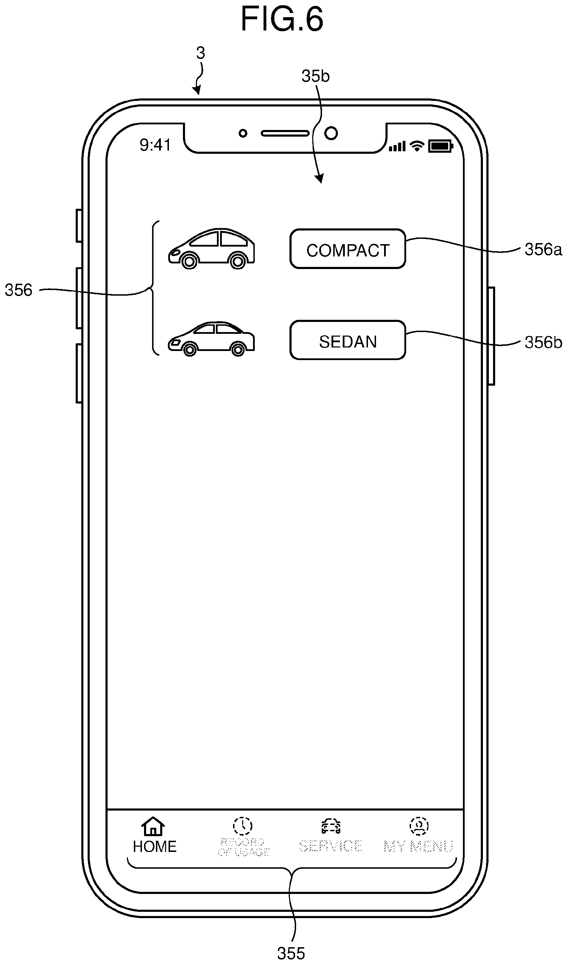

The display control unit 311 controls the details of display on the operation and display unit 35. The display control unit 311 causes the operation and display unit 35 to display a sign-up screen for a user to sign up for the wallet system, a login screen for logging in the wallet system, a deposit screen for depositing electronic money into a wallet, a payment method selection screen 35a (see FIG. 4) for payment, a vehicle class display screen 35b (see FIGS. 5 and 6) for displaying a target facility, and the like, based on a user operation (e.g., a touch, a flick, etc.). In addition, the display control unit 311 causes a transition from one screen to another screen, based on a user operation.

The depositing way registration unit 312 registers a depositing way for depositing electronic money. Specifically, the depositing way registration unit 312 outputs, to the wallet server 1, a depositing way registration request for registering different payment methods (e.g., a bank account, a credit card, etc.) operated by a plurality of service providers, as a depositing way for depositing electronic money. When acquiring the depositing way registration request from the depositing way registration unit 312, the control unit 11 of the wallet server 1 causes the storage unit 13 to store the payment methods contained in the depositing way registration request as user information 131, thereby registering the payment methods as depositing ways.

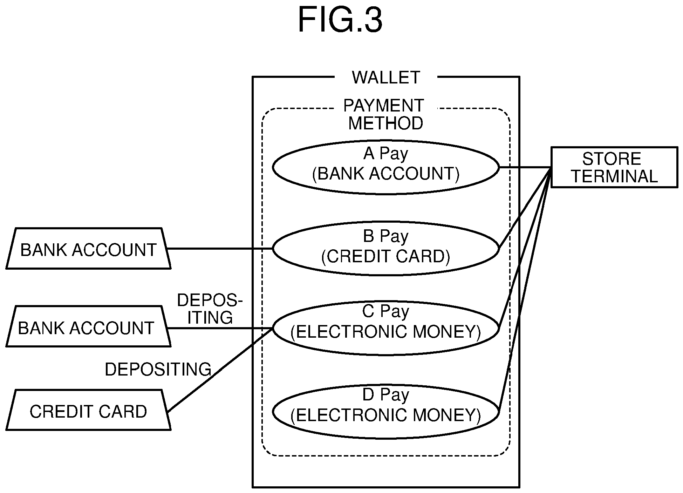

FIG. 3 is a diagram that schematically illustrates a relationship between a wallet and a payment method in the wallet system. The term "payment method" refers to a funding source for payment. A plurality of payment methods are registered in the wallet. Examples of the payment methods may include, but not limited to, "A Pay" corresponding to payment with a bank account, "B Pay" corresponding to payment with a credit card, "C Pay" corresponding to payment with electronic money, and "D Pay" corresponding to payment with electronic money. "A Pay" is a payment method of directly deducting a payment amount from a bank account. Credit cards ("B Pay") are respectively associated with bank accounts. When each credit card is used, a payment amount is deducted from the corresponding bank account at a later date. Electronic money ("C Pay") is associated with depositing ways, such as a bank account and a credit card, as ways to deposit electronic money. Electronic money may thus be deposited into the depositing ways. Electronic money ("D Pay") is not necessarily associated with depositing ways, such as a bank account and a credit card, in a case of a prepaid system of depositing cash or the like in advance.

The user selects one of the payment methods to make payment between the user terminal 3 and the store terminal 4. Specifically, the user executes payment ways such as payment to be made in a contactless manner between the near-field wireless communication unit 34 of the user terminal 3 and a near-field wireless communication unit 44 of the store terminal 4 in such a manner that the user holds the user terminal 3 over the store terminal 4, payment to be made in such a manner that a barcode or a QR code (registered trademark) displayed on the store terminal 4 is read by a camera or the like of the user terminal 3, and payment to be made in such a manner that a barcode or a QR code (registered trademark) displayed on the user terminal 3 is read by a code reader or the like of the store terminal 4.

The payment method registration unit 313 registers the various payment methods. The payment method registration unit 313 outputs, to the wallet server 1, a payment method registration request for registering the payment methods. When acquiring the payment method registration request from the payment method registration unit 313, the control unit 11 of the wallet server 1 causes the storage unit 13 to store the payment methods contained in the payment method registration request as user information 131, thereby registering the payment methods as payment methods.

The depositing processor 314 deposits electronic money into the wallet. Specifically, the depositing processor 314 outputs, to the wallet server 1, a depositing request for depositing electronic money, by the payment method registered as the depositing way. When acquiring the depositing request from the depositing processor 314, the control unit 11 of the wallet server 1 increases the balance of electronic money in the wallet, based on deposit amount information contained in the depositing request. In other words, the control unit 11 updates wallet information 132 stored in the storage unit 13, in accordance with the increase in balance of electronic money in the wallet.

The payment processor 315 makes payment by the payment method which the user selects. Specifically, the payment processor 315 outputs a payment request to the store terminal 4 through the near-field wireless communication unit 34, as a payment way. The payment processor 315 may output the payment request to the store terminal 4 in such a manner that a barcode or a QR code (registered trademark) displayed on the store terminal 4 is read by the camera or the like of the user terminal 3, as the payment way. Alternatively, the payment processor 315 may output the payment request to the store terminal 4 in such a manner that a barcode or a QR code (registered trademark) displayed on the user terminal 3 is read by the code reader or the like of the store terminal 4, as the payment way. The payment request to be output from the payment processor 315 to the store terminal 4 may contain information indicating a payment amount (hereinafter, referred to as "payment amount information") or does not necessarily contain payment amount information.

In the payment with the bank account or the credit card, subsequently, the payment processor 315 outputs, to the wallet server 1, a payment request for making payment using one of the payment ways. When acquiring the payment request from the payment processor 315, the control unit 11 of the wallet server 1 outputs, to the payment service provider server 2, payment amount information contained in the payment request.

In the case where the payment processor 315 makes the payment with the electronic money, a control unit 41 of the store terminal 4 outputs a payment request containing payment amount information to the wallet server 1 via the network NW. When acquiring the payment request from the store terminal 4, the control unit 11 of the wallet server 1 decreases the balance of electronic money in the wallet, based on the payment amount information contained in the payment request. In other words, the control unit 11 updates the wallet information 132 and payment information 133 stored in the storage unit 13, in accordance with the decrease in balance of electronic money in the wallet.

The storage unit 33 stores data of various screens which the display control unit 311 causes the operation and display unit 35 to display. The storage unit 33 temporarily stores the user information 131, the wallet information 132, the payment information 133, and the like as required.

The near-field wireless communication unit 34 has communication functions aligned with the standards such as near field communication (NFC), Bluetooth (registered trademark) low energy (BLE), and infrared data association (IrDA). The user terminal 3 establishes near-field wireless communications with the store terminal 4 through the near-field wireless communication unit 34 in making payment with, for example, electronic money.

The operation and display unit 35 includes, for example, a touch panel display. The operation and display unit 35 has an input function of accepting an operation through a user's finger, a pen, or the like, and a display function of displaying various kinds of information, based on the control by the display control unit 311.

The store terminal 4 is installed in, for example, a store (a member store) in which the wallet system is available. However, the store terminal 4 may be a server that functions as a virtual store on the Internet (i.e., an "electronic commerce site"). The store terminal 4 includes a control unit 41, a communication unit 42, a storage unit 43, and a near-field wireless communication unit 44. The control unit 41, the communication unit 42, the storage unit 43, and the near-field wireless communication unit 44 are respectively similar to the control unit 11, the communication unit 12, the storage unit 13, and the near-field wireless communication unit 34 in a physical aspect.

With reference to FIGS. 4 to 6, next, a description will be given of display control which the display control unit 311 performs on the operation and display unit 35 in the wallet system including the wallet server 1 according to the present embodiment.

FIG. 4 illustrates an exemplary payment method selection screen 35a which the display control unit 311 causes the operation and display unit 35 to display. FIG. 4 illustrates an exemplary payment method selection screen 35a in a case where "A Pay", "B Pay", "C Pay", and "D Pay" are registered as the payment methods. Specifically, the payment method selection screen 35a includes payment icons 351 to 354 displayed in a list form, and a menu selection region 355. The payment method selection screen 35a is, for example, a screen to be displayed when a wallet application is opened.

Each of the payment icons 351 to 354 is a region where a payment method is displayed, and accepts a request for selecting the displayed payment method. The display control unit 311 displays, on the payment icon 351, a payment name 351a indicating a name of a payment method available in the user terminal 3, a payment phrase 351b explicitly indicating that payment is made by the payment method, and a payment information region 351c where additional information on the payment method is displayed.

Specifically, the payment icon 351 displays, as the payment name 351a, an emblem (e.g., a logo mark, an acceptance mark, etc.) including the name of "A Pay". The payment icon 351 also displays, as the payment phrase 351b, characters "Pay with A Pay". The payment icon 351 also displays, as the payment information region 351c, campaign information on service of "A Pay". Each of the payment icons 352 to 354 displays the name of the corresponding payment method, an emblem indicating the corresponding payment method, a payment phrase, additional information, and the like. Each of the payment icons 352 to 354 is similar to the payment icon 351 in a functional aspect.

It is assumed in FIG. 4 that the user performs operation input by selecting one of the payment icons (the payment icons 351 to 354) indicating the payment methods "A Pay" to "D Pay". The control unit 11 then causes the display to display vehicle renting conditions set based on credit information on the payment methods ("A Pay" to "D Pay") registered in the wallet system. The vehicle renting conditions are, for example, rentable vehicle classes set based on the credit information. The rentable vehicle classes are set based on the credit information on one of the payment methods "A Pay" to "D Pay" which the user inputs.

FIGS. 5 and 6 each illustrate an exemplary vehicle class display screen 35b which the display control unit 311 causes the operation and display unit 35 to display. FIG. 5 illustrates three vehicle classes, that is, "Compact" indicating a compact car-type vehicle, "Sedan" indicating a sedan-type vehicle, and "Premium" indicating a premium car (luxury car)-type vehicle. These vehicle classes are displayed in a vehicle class display region 356. Selecting one of class selection buttons 356a to 356c causes transition to a screen for applying rental of a vehicle categorized as "Compact", a screen for applying rental of a vehicle categorized as "Sedan", or a screen for applying rental of a vehicle categorized as "Premium".

On the other hand, FIG. 6 illustrates two vehicle classes, that is, "Compact" indicating a compact car-type vehicle and "Sedan" indicating a sedan-type vehicle. These vehicle classes are also displayed in the vehicle class display region 356. The vehicle class display screen 35b illustrated in FIG. 6 is displayed in a case where a selected one of the payment methods is low in credit to be determined based on the credit information, as compared with the case where the vehicle class display screen 35b illustrated in FIG. 5 is displayed. When the credit is low, the number of rentable vehicle classes is restricted. As a result, the user cannot rent a premium car-type vehicle. In other words, when a selected one of the payment methods in FIG. 4 is high in credit, a large number of rentable vehicle classes are displayed in accordance with the credit. On the other hand, when a selected one of the payment methods in FIG. 4 is low in credit, a restricted small number of rentable vehicle classes are displayed in accordance with the credit. As a result, the user may easily recognize a rentable vehicle class, based on the credit information on a selected one of the payment methods "A Pay" to "D Pay". This configuration thus enables improvement in convenience of the wallet system in which the plurality of payment methods are available. In addition, the administrator of the wallet server 1 may rent a vehicle in accordance with credit information on a payment method. Therefore, the administrator of the wallet server 1 may rent a luxury vehicle such as a premium car-type vehicle to a reliable user in accordance with credit.

In addition, the control unit 11 may cause the display to display one of the payment methods providing the user with the most advantageous condition, based on the credit information on the plurality of payment methods. Specifically, the control unit 11 may determine rentable vehicle classes for each payment method, based on the credit information on the payment methods ("A Pay" to "D Pay") registered in the wallet system, and may cause the display to display which payment method allows the user to select a vehicle from a larger number of vehicle classes. As a result, the user may rent the vehicle on the more advantageous condition. This configuration thus enables improvement in convenience of the wallet system in which the plurality of payment methods are available.

In addition, the control unit 11 may cause the display to display a condition set based on a statistical value of scores calculated based on the credit information on the payment methods. Specifically, the control unit 11 causes the display to display a condition set based on a statistical value (e.g., an average value, a maximum value, a minimum value, a mode, etc.) of scores (digitized values of credit; it is assumed herein that larger the numerical value is, higher the credit is) calculated based on the credit information on the payment methods ("A Pay" to "D Pay") registered in the wallet system. For example, when the control unit 11 causes the display to display the condition set based on the maximum value of the scores, the user may rent a vehicle on the most advantageous condition. For example, when the control unit 11 causes the display to display the condition set based on the average value or mode of the scores, the administrator of the wallet server 1 may recommend a vehicle categorized in an appropriate class to the user, based on a comprehensive determination that is made from the credit information on the payment methods. When the control unit 11 causes the display to display the condition set based on the minimum value of the scores, the administrator of the wallet server 1 may rent a luxury vehicle such as a premium car-type vehicle to the reliable user, based on the credit information on the payment methods.

The control unit 11 of the wallet server 1 may also output, to the user terminal 3, authentication information for unlocking a door of a vehicle, and the user terminal 3 may output, to the vehicle, the authentication information acquired from the wallet server 1. The vehicle then determines whether the authentication information acquired from the user terminal 3 is appropriate authentication information. When the vehicle determines that this authentication information is appropriate authentication information, the vehicle unlocks the door. The vehicle may determine whether the authentication information is appropriate, based on information that is stored in a storage unit of the vehicle in advance. Alternatively, the vehicle may determine whether the authentication information is appropriate, based on whether the authentication information acquired from the wallet server 1 coincides with the authentication information acquired from the user terminal 3. As a result, the user may perform a series of operations from selection of a vehicle class to unlock of a vehicle door continuously (in a one-stop manner) in the wallet system. This configuration thus enables improvement in convenience of the wallet system in which the plurality of payment methods are available.

As described above, the payment system, payment program, and payment server according to the present embodiment are capable of improving the convenience of a wallet system in which a plurality of payment methods are available. It should be noted that even a payment server in which one payment method is available enables improvement in convenience of a payment system, by displaying, on a display, a vehicle renting condition set based on credit information on the payment method.

The vehicle renting condition may be a vehicle rental fee set based on credit information. Specifically, when it is determined that credit is high, from credit information on a selected one of the payment methods, the administrator of the wallet server 1 treats the user well in terms of a fee. As a result, the user may rent a vehicle inexpensively.

The present disclosure enables improvement in convenience of a wallet system in which a plurality of payment methods are available.

Although the disclosure has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A payment system comprising:
a payment server (1) comprising a first processor (11) comprising hardware; and
a terminal (3) comprising
a second processor (31) comprising hardware, and a display (35), wherein
the first processor is configured to cause the display to display a condition for renting a vehicle, the condition being set based on credit information on a plurality of payment methods registered in a wallet system.

2. The payment system according to claim 1, wherein the condition includes at least one of a rentable vehicle class set based on the credit information and a vehicle rental fee set based on the credit information.

3. The payment system according to claim 1 or 2, wherein the condition is set based on the credit information on any of the payment methods which a user inputs.

4. The payment system according to any of claims 1 to 3, wherein the first processor (11) is configured to cause the display (35) to display one of the payment methods providing a user having the terminal with a most advantageous condition, based on the credit information on the plurality of payment methods.

5. The payment system according to any of claims 1 to 4, wherein the condition is set based on a statistical value of scores calculated based on the credit information on the payment methods.

6. The payment system according to any of claims 1 to 5, comprising
a vehicle to be rented, wherein
the first processor (11) is configured to output, to the terminal (3), authentication information for unlocking a door of the vehicle,
the terminal is configured to output, to the vehicle, the authentication information acquired from the first processor, and
the vehicle is configured to
determine whether the authentication information acquired from the terminal is appropriate authentication information, and
unlock the door in a case where the vehicle has determined that the authentication information is appropriate authentication information.

7. A non-transitory computer-readable recording medium on which an executable program is recorded, the program causing a processor (11) of a computer to execute
outputting, to a display (35), a condition for renting a vehicle, the condition being set based on credit information on a plurality of payment methods registered in a wallet system.

8. The non-transitory computer-readable recording medium according to claim 7, wherein the condition includes at least one of a rentable vehicle class set based on the credit information and a vehicle rental fee set based on the credit information.

9. The non-transitory computer-readable recording medium according to claim 7 or 8, wherein the condition is set based on the credit information on any of the payment methods which a user inputs.

10. The non-transitory computer-readable recording medium according to any of claims 7 to 9, wherein the program causes the processor (11) to execute outputting one of the payment methods providing a user having a terminal (3) including the display (35) with a most advantageous condition, based on the credit information on the plurality of payment methods.

11. The non-transitory computer-readable recording medium according to any of claims 7 to 10, wherein the condition is set based on a statistical value of scores calculated based on the credit information on the payment methods.

12. The non-transitory computer-readable recording medium according to any of claims 7 to 11, wherein the program causes the processor (11) to execute outputting authentication information for unlocking a door of the vehicle.

13. A payment server (1) comprising:
a processor (11) comprising hardware, the processor being configured to cause a display (35) to display a condition for renting a vehicle, the condition being set based on credit information on a plurality of payment methods registered in a wallet system.

14. The payment server according to claim 13, wherein the condition includes at least one of a rentable vehicle class set based on the credit information and a vehicle rental fee set based on the credit information.

15. The payment server according to claim 13 or 14, wherein the condition is set based on the credit information on any of the payment methods which a user inputs.

16. The payment server according to any of claims 13 to 15, wherein the processor (11) is configured to cause the display (35) to display one of the payment methods providing a user having a terminal (3) including the display with a most advantageous condition, based on the credit information on the plurality of payment methods.

17. The payment server according to any of claims 13 to 16, wherein the condition is set based on a statistical value of scores calculated based on the credit information on the payment methods.
